# EUROPEAN PATENT APPLICATION

(11) **EP 4 779 049 A1**
(43) Date of publication of application: **22.07.2026**
(21) Application number: 24867226.3
(22) Date of filing: 22.08.2024
(51) Int. Cl.: C22C 38/04, C22C 38/02, C22C 38/26, C22C 38/32, C22C 38/28, C22C 38/24, C22C 38/22, C22C 38/44, C22C 38/46, C22C 38/48, C22C 38/50, C22C 38/20, C22C 38/42, C22C 33/04, C21D 1/26, C21D 1/18, C21D 6/00, C21D 8/02, C23C 2/06, C23C 2/40, B21B 1/22

(54) **HIGH-STRENGTH HYDROGEN-EMBRITTLEMENT-RESISTANT PRESS HARDENING STEEL AND PREPARATION METHOD THEREFOR AND USE THEREOF**

(30) Priority: 19.09.2023 CN 202311206733; 19.09.2023 CN 202311211073
(71) Applicant: Beijing Chehejia Automobile Technology Co., Ltd., Beijing 101300 (CN)
(72) Inventor: LU, Qi, Beijing 101300 (CN); CUI, Lei, Beijing 101300 (CN); SHU, Jun, Beijing 101300 (CN); ZHOU, Shilong, Beijing 101300 (CN); CHAI, Zhisong, Beijing 101300 (CN); DUAN, Jichao, Beijing 101300 (CN)
(74) Representative: 2SPL Patentanwälte PartG mbB
(86) International application number: PCT/CN2024/114033
(87) International publication number: WO 2025/060811

(57) **Abstract**

The present application relates to the technical field of alloy materials, and provides high-strength hydrogen-embrittlement-resistant press hardening steel and a preparation method therefor and a use thereof. The high-strength hydrogen-embrittlement-resistant press hardening steel comprises the following components in percentage by weight: 0.22-0.28% of C, 0.8-1.4% of Mn, 0.01-0.08% of Nb, 0.2-0.8% of Cr, 0.001-0.005% of B, 0.01-0.06% of TI, 0-0.5% of V, 0-0.5% of Si, 0-1.0% of Mo, 0-2.0% of Ni, 0-1.0% of W, and the balance being Fe and inevitable impurities, wherein the ratio of the weight percentage of Cr to the weight percentage of Nb is greater than 8. The high-strength hydrogen-embrittlement-resistant press hardening steel can have excellent strength and hydrogen embrittlement resistance, so that the safety performance of vehicles can be greatly improved, and the purpose of light weight is achieved.

## Description

This application claims the priority of the Chinese Patent application filed on September 19, 2023 before the CNIPA, China National Intellectual Property Administration with the application number of 202311206733.6, and the title of "HIGH-STRENGTH HYDROGEN EMBRITTLEMENT-RESISTANT PRESS-HARDENING STEEL AND USE THEREOF", as well as the Chinese Patent application filed on September 19, 2023 before the CNIPA with the application number of 202311211073.0, and the title of "PRESS-HARDENING STEEL AND PREPARATION METHOD AND USE THEREOF", which are incorporated herein in their entireties by reference.

### TECHNICAL FIELD

The present application relates to the technical field of alloy materials, and in particular, to a high-strength hydrogen embrittlement-resistant press-hardening steel and a preparation method and use thereof.

### BACKGROUND

The press-hardening steel, due to its excellent performance such as high strength, low springback, and high dimensional accuracy, is widely used in vehicle safety-related structural parts, enabling weight reduction and energy saving while improving vehicle body safety. The production process of the press-hardening steel mainly includes the steps of smelting, casting, hot rolling, pickling, cold rolling, annealing, and hot stamping. The step of hot stamping generally includes the steps of blank heating, stamping forming, pressure-holding quenching, and laser trimming.

Currently, 22MnB5 press-hardening steel with a strength of 1,500 MPa is the most widely used in the vehicle body safety-related structural parts due to its excellent combination of strength and resistance to hydrogen embrittlement and delayed cracking. On the premise of ensuring safety performance requirements, vehicle lightweighting has become one of the most direct and effective solutions for energy conservation and emission reduction. Based on this, higher-strength-grade (1,600-2,000 MPa) press-hardening steels are under investigation in the related art to partially or completely replace the 1,500 MPa grade press-hardening steel. However, although such 1,600-2,000 MPa grade press-hardening steels exhibit high strength, they also come with a risk of hydrogen embrittlement cracking and fail to meet the SEP1970 standard, i.e., no cracking within 120 hours under acid immersion (0.1 mol/L HCl) under four-point bending loading at a preloaded 100% yield strength. When used in the vehicle safety-related structural parts, it is difficult to ensure the safety performance of vehicles. Therefore, how to improve the strength of the press-hardening steel while maintaining its hydrogen embrittlement resistance is an urgent problem to be solved.

### SUMMARY

The present application aims to solve, at least to some extent, the difficult problems in the related art. To this end, embodiments of the present application provide a high-strength hydrogen embrittlement-resistant press-hardening steel and a preparation method and use thereof.

In a first aspect, the high-strength hydrogen embrittlement-resistant press-hardening steel according to the embodiments of the present application includes, by weight percent, following components: C 0.22-0.28%, Mn 0.8-1.4%, Nb 0.01-0.08%, Cr 0.2-0.8%, B 0.001-0.005%, Ti 0.01-0.06%, V 0-0.5%, Si 0-0.5%, Mo 0-1.0%, Ni 0-2.0%, and W 0-1.0%, with balance being Fe and inevitable impurities, and a ratio of a weight percent of Cr to a weight percent of Nb being greater than 8.

Advantages and technical effects achieved by the press-hardening steel of the embodiments of the present application are as follows.
(1) The press-hardening steel of the embodiments of the present application contains specified amounts of C, Mn, Cr, Mo, and B, which may improve the hardenability of the press-hardening steel, reduce the critical cooling rate, ensure that the final structure contains 95% or more martensite, and thus enhance the tensile strength of the press-hardening steel.
(2) The press-hardening steel of the embodiments of the present application contains specified amounts of both Cr and Nb, and the ratio of the weight percent of Cr to the weight percent of Nb is greater than 8. Due to the limited precipitation content of Nb-based carbides, the addition of a small amount of Cr may promote the precipitation of Nb-containing complex carbides, forming Cr-Nb complex carbides. This compensates for the insufficient Nb content while still ensuring a large number of nanoscale precipitates in the microstructure, thereby significantly enhancing the precipitation strengthening effect. Meanwhile, more importantly, a large number of Cr-Nb complex carbides may serve as hydrogen traps to enhance the hydrogen embrittlement resistance of the press-hardening steel, ensuring that the hydrogen embrittlement resistance is maintained while the strength is improved. It should be noted that the Cr content should not be less than 0.2% nor more than 0.8%. The Cr content less than 0.2% may reduce the kinetics of Cr- promoted precipitation of the Cr-Nb complex carbides, while the Cr content more than 0.8% may cause Cr to precipitate separately as Cr-rich carbides, reducing the content of Cr-Nb complex carbides and consequently degrading the hydrogen embrittlement resistance of the press-hardening steel.
(3) The press-hardening steel of the embodiments of the present application contains a specified amount of Ti, and the main function of Ti is to fix N elements to form TiN, so as to avoid N and B forming BN, thereby fully exploiting the effect of B in improving hardenability.
(4) The press-hardening steel of the embodiments of the present application further contains a specified amount of V. V can refine the grain size, resulting in a small prior austenite grain size of the press-hardening steel, ensuring that the toughness does not decrease or even improves while the strength is improved. Meanwhile, its carbides may also serve as hydrogen traps to enhance the hydrogen embrittlement resistance of the press-hardening steel.
(5) The press-hardening steel of the embodiments of the present application further contains a specified amount of Si. During self-tempering after hot stamping and press hardening, Si can hinder carbon diffusion, inhibit the decomposition of martensite and the aggregation and growth rate of carbides, thereby significantly enhancing the tempering stability and strength of the press-hardening steel.
(6) The press-hardening steel of the embodiments of the present application further contains a specified amount of Ni. Ni may ensure that the strength of the press-hardening steel is improved without significantly reducing its toughness.
(7) The press-hardening steel of the embodiments of the present application further contains a specified amount of W. W forms carbides, which may improve the strength of the press-hardening steel while simultaneously improving its toughness.

In some embodiments, 710 MPa < 3,000 MPa × weight percent of C + 65 MPa × weight percent of Mn < 900 MPa.

In some embodiments, the weight percent of Mn is 0.8-1.3%.

In some embodiments, the ratio of the weight percent of Cr to the weight percent of Nb is greater than 12.

In some embodiments, the weight percent of Nb is 0.02-0.04%.

In some embodiments, content of impurity N is less than 100 ppm, and content of impurity P, content of impurity S, and content of impurity O are each less than 200 ppm.

In some embodiments, a critical cooling rate of the high-strength hydrogen embrittlement-resistant press-hardening steel is 50°C/s or less, and/or, a metallographic structure of the high-strength hydrogen embrittlement-resistant press-hardening steel is 95% or more martensite, preferably 100% martensite.

In some embodiments, a prior austenite grain size of the high-strength hydrogen embrittlement-resistant press-hardening steel is 3-15 µm, and/or, a bending angle of a 1.4 mm-thick steel sheet of the high-strength hydrogen embrittlement-resistant press-hardening steel in a VDA238-100 standard test is greater than 50°.

In some embodiments, the high-strength hydrogen embrittlement-resistant press-hardening steel has a tensile strength of 1,600 MPa or more, and exhibits no cracking within 120 hours under acid immersion under four-point bending loading at a preloaded 100% yield strength in a SEP1970 standard test.

In addition, the embodiments of the present application further provide use of the high-strength hydrogen embrittlement-resistant press-hardening steel in a vehicle.

Advantages and technical effects achieved by the use of the embodiments of the present application are as follows.

Due to excellent strength and hydrogen embrittlement resistance, the press-hardening steel of the embodiments of the present application may be used in vehicle components such as seat crossbeams, A/B-pillars, door anti-collision beams, front and rear bumpers, sill beams, and center tunnels, thereby significantly improving the safety performance of vehicles and achieving lightweighting.

In a second aspect, a preparation method of a press-hardening steel according to the embodiments of the present application includes the steps of: smelting, casting, hot rolling, coiling, pickling, cold rolling, continuous annealing, and hot stamping, wherein a holding temperature of the continuous annealing is 740°C or more, and a cooling rate of the continuous annealing is less than 40°C/s; the content of epitaxial ferrite in microstructure after the continuous annealing is 10% or more.

The press-hardening steel includes, by weight percent, the following components: C 0.22-0.28%, Mn 0.8-1.4%, Si 0.1-0.5%, Nb 0.01-0.08%, Cr 0.2-0.8%, B 0.001-0.005%, Ti 0.01-0.06%, V 0-0.5%, Mo 0-1.0%, Ni 0-2.0%, W 0-1.0%, and Cu 0-2.0%, with the balance being Fe and inevitable impurities.

Advantages and technical effects achieved by the preparation method of the press-hardening steel of the embodiments of the present application are as follows.
(1) The press-hardening steel of the embodiments of the present application contains specified amounts of C, Mn, Cr, Mo, and B, which may improve the hardenability of the press-hardening steel, reduce the critical cooling rate, ensure that the final structure contains 95% or more martensite, and thus enhance the tensile strength of the press-hardening steel.
(2) The press-hardening steel of the embodiments of the present application contains a specified amount of Nb, and the strength of the press-hardening steel is improved through the precipitation strengthening effect of the Nb. Meanwhile, the precipitation of nanoscale Nb-containing carbides can effectively inhibit the growth of prior austenite grain boundaries, refine the microstructure, and thus improve the bending toughness of the press-hardening steel.
(3) The press-hardening steel of the embodiments of the present application contains a specified amount of Ti, and the main function of Ti is to fix N elements to form TiN, so as to avoid N and B forming BN, thereby fully exploiting the effect of B in improving hardenability.
(4) The press-hardening steel of the embodiments of the present application further contains a specified amount of V. V can refine the grain size, resulting in a small prior austenite grain size of the press-hardening steel, ensuring that the toughness does not decrease or even improves while the strength is improved.
(5) The press-hardening steel of the embodiments of the present application further contains a specified amount of Si. During self-tempering after hot stamping and press hardening, Si can hinder carbon diffusion, inhibit the decomposition of martensite and the aggregation and growth rate of carbides, thereby significantly enhancing the tempering stability of the press-hardening steel and ensuring that the strength is hardly reduced.
(6) The press-hardening steel of the embodiments of the present application further contains a specified amount of Ni. Ni may ensure that the strength of the press-hardening steel is improved without significantly reducing its toughness.
(7) The press-hardening steel of the embodiments of the present application further contains a specified amount of W. W forms carbides, which may improve the strength of the press-hardening steel while simultaneously improving its toughness.
(8) The press-hardening steel of the embodiments of the present application further contains a specified amount of Cu. The function of Cu is to provide precipitation strengthening, thereby improving the strength of the press-hardening steel.
(9) Based on the chemical composition of the press-hardening steel of the embodiments of the present application, according to the preparation method of the embodiments of the present application, the initial structure state is optimized by adjusting the holding temperature of continuous annealing to be 740°C or more and adjusting the cooling rate of continuous annealing to be less than 40°C/s, introducing 10% or more epitaxial ferrite enriched with C, Mn, and Si, so as to provide more austenite nucleation sites during the hot stamping process and refine the prior austenite grain size, thereby improving the bending toughness of the high-strength press-hardening steel.
(10) According to the preparation method of the embodiments of the present application, higher-strength-grade (1.6-1.9 GPa) press-hardening steels may be produced without changing the existing production process, ensuring the improvement of the strength without sacrificing the toughness. Such steels are expected to replace the traditional 1.5 GPa press-hardening steel, achieving vehicle body weight reduction, ensuring the safety of passengers, and better improving the vehicle driving range.

In some embodiments, the holding temperature of the continuous annealing is 740-880°C.

In some embodiments, the holding temperature of the continuous annealing is 740-860°C.

In some embodiments, the holding temperature of the continuous annealing is 780-880°C.

In some embodiments, the cooling rate of the continuous annealing is 35°C/s or less, preferably 10-35°C/s

In some embodiments, the cooling rate of the continuous annealing is 25°C/s or less, preferably 10-25°C/s.

In some embodiments, the content of the epitaxial ferrite in the microstructure after the continuous annealing is 12% or more.

In some embodiments, the content of the epitaxial ferrite in the microstructure after the continuous annealing is 15% or more.

In some embodiments, a prior austenite grain size of the press-hardening steel is 3-15 µm.

In addition, the embodiments of the present application further provide use of the press-hardening steel in a vehicle.

Advantages and technical effects achieved by the use of the embodiments of the present application are as follows.

Due to excellent strength and bending toughness, the press-hardening steel of the embodiments of the present application may be used in vehicle components such as seat crossbeams, A/B-pillars, door anti-collision beams, front and rear bumpers, sill beams, and center tunnels, thereby significantly improving the safety performance of vehicles and achieving lightweighting.

The foregoing description is merely a summary of the technical solutions of the present application. For a clearer understanding of the technical means of the present application, implementation may be carried out in accordance with the content of the description. Furthermore, in order to make the foregoing and other objects, features and advantages of the present application more comprehensible, specific embodiments of the present application are set forth hereinafter.

### BRIEF DESCRIPTION OF THE DRAWINGS

For a clearer understanding of the technical solutions in the embodiments of the present application or the prior art, the drawings used in the description of the embodiments or the prior art will be briefly introduced hereinafter. Obviously, the drawings described hereinafter are some embodiments of the present application. For those of ordinary skill in the art, other drawings may be obtained based on these drawings without creative efforts.

The drawings described herein are provided for a further understanding of the present application and constitute a part of the present application. The exemplary embodiments of the present application and the descriptions thereof are used to explain the present application and do not constitute an improper limitation to the present application. In the drawings:
FIG. 1 is a schematic flowchart of a preparation method of a high-strength hydrogen embrittlement-resistant press-hardening steel of the present application;
FIG. 2 is a schematic flowchart of a hot stamping step of a high-strength hydrogen embrittlement-resistant press-hardening steel of the present application;
FIG. 3 is a hot stamping process diagram of a high-strength hydrogen embrittlement-resistant press-hardening steel of example 3 of the present application;

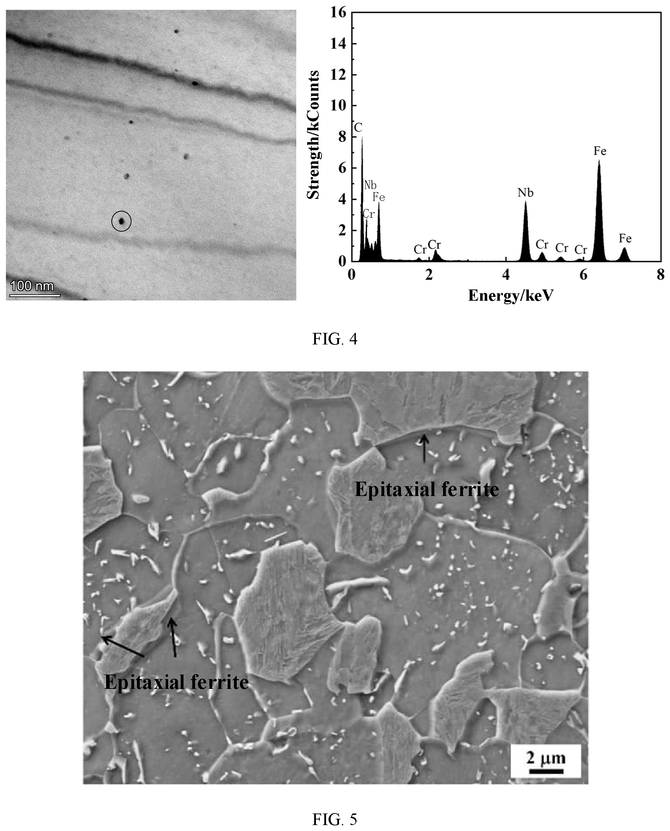

FIG. 4 is a transmission electron microscopy image and an energy dispersive spectroscopy spectrum of a high-strength hydrogen embrittlement-resistant press-hardening steel of example 3 of the present application, wherein a circled matter in a left image is a Cr-Nb complex carbide;
FIG. 5 is a scanning electron microscopy image of a press-hardening steel of example 1;

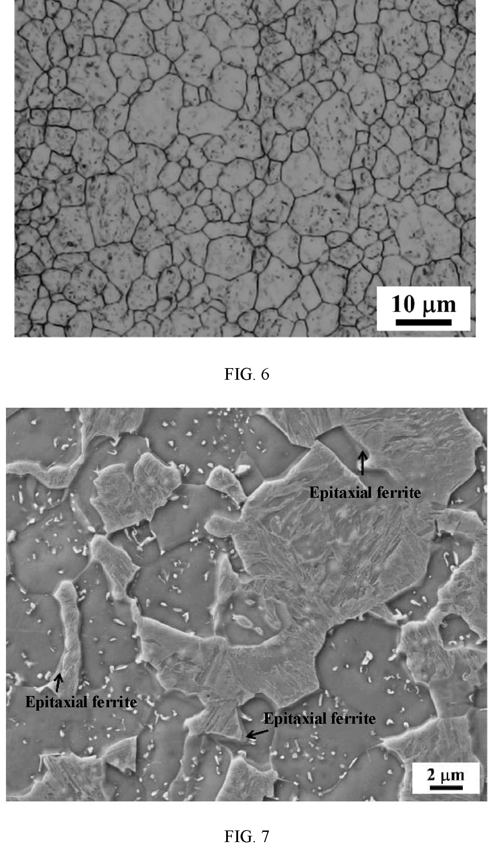

FIG. 6 is a metallographic image of a press-hardening steel of example 1;
FIG. 7 is a scanning electron microscopy image of a press-hardening steel of example 2;

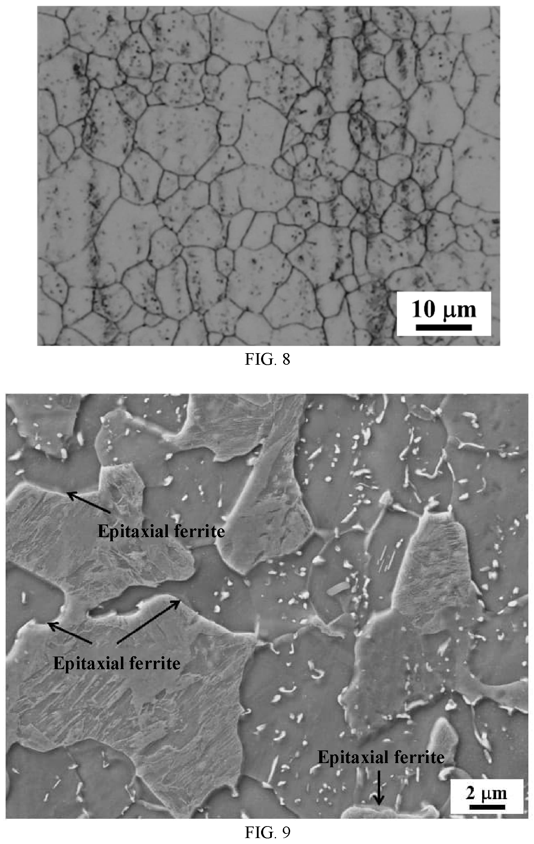

FIG. 8 is a metallographic image of a press-hardening steel of example 2;
FIG. 9 is a scanning electron microscopy image of a press-hardening steel of example 3;

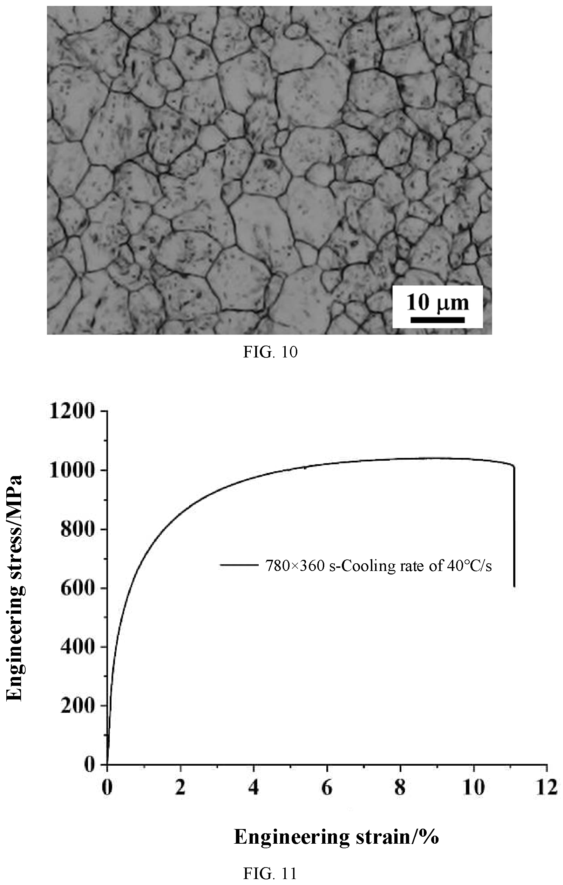

FIG. 10 is a metallographic image of a press-hardening steel of example 3; and
FIG. 11 is a graph showing an engineering stress-strain curve for an Al-Si coated sheet of comparative example 3.

### DETAILED DESCRIPTION

The objectives, technical solutions and advantages of the embodiments of the present application will be made clearer from the following detailed description taken in conjunction with the accompanying drawings in the embodiments of the present application. Obviously, the described embodiments are only part of the embodiments of the present application, rather than all of them. Based on the embodiments in the present application, all other embodiments obtained by a person of ordinary skill in the art without creative efforts shall fall within the scope of protection of the present application.

In order to make the technical problems to be solved, technical solutions and beneficial effects of the present application clearer, the present application will be further described in detail below with reference to the accompanying drawings and embodiments. It should be understood that the specific embodiments described herein are only used to explain the present application and are not intended to limit the present application.

The terms "first", "second", "third", "fourth" and the like (if any) in the description, claims and accompanying drawings of the present application are used to distinguish similar objects and are not necessarily used to describe a specific order or sequence. It should be understood that the data used in this way may be interchanged under appropriate circumstances, so that the embodiments of the present application described herein can be implemented in sequences other than those illustrated or described herein, for example. In addition, the terms "comprise/include", "have" and any variations thereof are intended to cover non-exclusive inclusion. For example, a process, method, system, product or device that includes a series of steps or units is not necessarily limited to those steps or units that are clearly listed, but may include other steps or units that are not clearly listed or inherent to such process, method, product or device.

The technical solutions of the present application will be described in detail below with reference to specific embodiments. These specific embodiments may be combined with each other, and the same or similar concepts or processes may not be repeated in some embodiments.

Embodiments of the present application provide a high-strength hydrogen embrittlement-resistant press-hardening steel, including, by weight percent, the following components: C 0.22-0.28%, Mn 0.8-1.4%, Nb 0.01-0.08%, Cr 0.2-0.8%, B 0.001-0.005%, Ti 0.01-0.06%, V 0-0.5%, Si 0-0.5%, Mo 0-1.0%, Ni 0-2.0%, and W 0-1.0%, with the balance being Fe and inevitable impurities, a ratio of a weight percent of Cr to a weight percent of Nb being greater than 8.

In the press-hardening steel of the embodiments of the present application, a weight percent of C is 0.22-0.28%, such as 0.22%, 0.23%, 0.24%, 0.25%, 0.26%, 0.27%, or 0.28%. The function of C is to improve the strength and hardenability of the press-hardening steel. When the weight percent of C is less than 0.22%, the strength of the press-hardening steel is less than 1600 MPa, failing to improve the strength compared with the currently used 22MnB5 press-hardening steel. When the weight percent of C is more than 0.28%, the toughness of the press-hardening steel is significantly reduced. Considering the balance between the strength and the toughness, the weight percent of C is selected to be 0.22-0.28%. Preferably, in some embodiments, the weight percent of C is 0.24-0.28%.

In the press-hardening steel of the embodiments of the present application, a weight percent of Mn is 0.8-1.4%, such as 0.8%, 0.9%, 1.0%, 1.1%, 1.2%, 1.3%, or 1.4%. Mn can increase the hardenability of the steel and reduce the austenite formation temperature. When the weight percent of Mn is less than 0.8%, the hardenability of the steel is poor, and the austenite formation temperature is high. When the weight percent of Mn is more than 1.4%, welding is adversely affected. Therefore, the weight percent of Mn is 0.8-1.4%. Preferably, in some embodiments, the weight percent of Mn is 0.8-1.3%.

In some embodiments, 710 MPa < 3,000 MPa × weight percent of C + 65 MPa × weight percent of Mn < 900 MPa. C and Mn exhibit solid solution strengthening effects. In the foregoing relational expression, 3,000 MPa represents the solid solution strength of C, and 65 MPa represents the solid solution strength of Mn. 3,000 MPa × the weight percent of C is a contribution value from the solid solution strengthening effect of C, and 65 MPa × the weight percent of Mn is a contribution value from the solid solution strengthening effect of Mn. When the contents of C and Mn satisfy the foregoing relational expression, the welding C equivalent can be controlled while improving the strength, thereby avoiding the deterioration of welding performance.

In the press-hardening steel of the embodiments of the present application, the weight percent of Nb is 0.01-0.08%, such as 0.01%, 0.02%, 0.03%, 0.04%, 0.05%, 0.06%, 0.07%, or 0.08%. Nb forms carbides during the hot stamping process, which can refine the grain size, resulting in a small prior austenite grain size of the press-hardening steel and increasing the toughness of the press-hardening steel. Meanwhile, the carbides may further serve as hydrogen traps to enhance the hydrogen embrittlement resistance of the press-hardening steel. When the weight percent of Nb is less than 0.01%, the toughness and hydrogen embrittlement resistance of the press-hardening steel are poor. When the weight percent of Nb is more than 0.08%, the grain refinement and precipitation strengthening effects are not significant. Therefore, the weight percent of Nb is 0.01-0.08%. Preferably, in some embodiments, the weight percent of Nb is 0.02-0.04%.

In the press-hardening steel of the embodiments of the present application, the weight percent of Cr is 0.2-0.8%, such as 0.2%, 0.3%, 0.4%, 0.5%, 0.6%, 0.7%, or 0.8%. A low critical cooling rate is required for the press-hardening steel to ensure complete transformation from austenite to martensite during the cooling process. However, reducing the prior austenite grain size will increase the critical cooling rate. Therefore, a specified amount of Cr needs to be added to improve the hardenability of the steel and reduce its critical cooling rate. When the weight percent of Cr is less than 0.2%, the critical cooling rate of the steel is relatively high, which may result in the formation of other soft phases such as ferrite and pearlite, significantly reducing the strength of the press-hardening steel. When the weight percent of Cr is more than 0.8%, dense Cr2O3 scale may be formed during the hot rolling process, which is difficult to remove completely by pickling and affects the hot-dip coating effect. Therefore, the weight percent of Cr is 0.2-0.8%. Preferably, in some embodiments, the weight percent of Cr is 0.4-0.7%.

In the present application, it is found that when Cr and Nb are within the respective defined ranges and satisfy the condition that the ratio of the weight percent of Cr to the weight percent of Nb is greater than 8, such as 9, 10, 11, 12, 13, 14, 15, 16, 17, 18, 19, 20, 21, and 22, Cr and Nb may form fine complex carbides, which provide the precipitation strengthening effect and may improve the mechanical properties of the press-hardening steel. Meanwhile, the Cr-Nb complex carbides may further serve as hydrogen traps to enhance the hydrogen embrittlement resistance of the press-hardening steel. Cr and Nb cooperate with each other, the two effects above jointly improve the mechanical properties and hydrogen embrittlement resistance of the press-hardening steel. The tensile strength of the press-hardening steel can reach 1,600 MPa or more, and the press-hardening steel does not crack at a 100% yield strength for 120 h.

When only Cr or only Nb is used, it is impossible to form the Cr-Nb complex carbides, affecting the mechanical properties and hydrogen embrittlement resistance of the press-hardening steel. When the Cr content exceeds the range in the embodiments of the present application, coarse carbides (100 nm or more, or even at the micron level), such as Cr₂₃C₆ and Cr₇C₃, are mainly formed, deteriorating the mechanical properties and reducing both the toughness and the strength. Additionally, a large amount of carbon will be consumed, reducing the strength. Meanwhile, the content of Cr-Nb complex carbides is greatly reduced, resulting in an insignificant hydrogen-trapping effect, which makes the press-hardening steel prone to hydrogen embrittlement cracking at the 100% yield strength. When the ratio of the weight percent of Cr to the weight percent of Nb is less than or equal to 8, the hydrogen embrittlement resistance of the press-hardening steel is also deteriorated, and the press-hardening steel is prone to hydrogen embrittlement cracking at the 100% yield strength.

Preferably, in some embodiments, the ratio of the weight percent of Cr to the weight percent of Nb is greater than 12. When the weight percent ratio of Cr to Nb is preferably within the above range, it is beneficial for further enhancing the mechanical properties and hydrogen embrittlement resistance of the press-hardening steel.

In the press-hardening steel of the embodiments of the present application, a weight percent of B is 0.001-0.005%, such as 0.001%, 0.002%, 0.003%, 0.004%, or 0.005%. The function of B is to improve the hardenability of the steel and reduce the critical cooling rate of the steel, enabling the steel material to transform from the austenite phase to the martensite phase in the hot stamping step, thereby improving the strength of the press-hardening steel. When the weight percent of B is less than 0.001%, the critical cooling rate of the steel is relatively high, which may result in the formation of other soft phases such as ferrite and pearlite, significantly reducing the strength of the press-hardening steel. When the weight percent of B is more than 0.005%, the hardenability effect is not significant. Therefore, the weight percent of B is 0.001-0.005%. Preferably, in some embodiments, the weight percent of B is 0.002-0.004%.

In the press-hardening steel of the embodiments of the present application, a weight percent of Ti is 0.01-0.06%, such as 0.01%, 0.02%, 0.03%, 0.04%, 0.05%, or 0.06%. After adding Ti, TiN precipitates will form, which may fix N element and prevent the consumption of B element, thereby fully exploiting the effect of B in improving hardenability. Preferably, in some embodiments, the weight percent of Ti is 0.02-0.05%.

V forms carbides during the hot stamping process, which can refine the grain size, resulting in a small prior austenite grain size of the press-hardening steel and increasing the toughness of the press-hardening steel. Meanwhile, its carbides may further serve as hydrogen traps to enhance the hydrogen embrittlement resistance of the press-hardening steel. When the weight percent of V is more than 0.5%, grain refinement and precipitation strengthening are not significant. Therefore, the weight percent of V is 0-0.5%. Preferably, in some embodiments, the weight percent of V is 0-0.05%.

In the press-hardening steel of the embodiments of the present application, a weight percent of Si is 0-0.5%, such as 0, 0.1%, 0.2%, 0.3%, 0.4%, or 0.5%. The function of Si is to improve the self-tempering resistance during the hot stamping process, thereby preventing a reduction in strength. When the weight percent of Si is more than 0.5%, more SiO₂ tends to form in the scale, which is not conducive to improving the surface quality of the hot-rolled strip steel. Therefore, the weight percent of Si is 0-0.5%. Preferably, in some embodiments, the weight percent of Si is 0-0.4%.

In the press-hardening steel of the embodiments of the present application, a weight percent of Mo is 0-1.0%, such as 0, 0.1%, 0.2%, 0.3%, 0.4%, 0.5%, 0.6%, 0.7%, 0.8%, 0.9%, or 1.0%. The function of Mo is to improve the hardenability. When the weight percent of Mo is more than 1.0%, the hardenability is not significant. Therefore, the weight percent of Mo is 0-1.0%. Preferably, in some embodiments, the weight percent of Mo is 0-0.5%.

In the press-hardening steel of the embodiments of the present application, a weight percent of Ni is 0-2.0%, such as 0, 0.2%, 0.4%, 0.6%, 0.8%, 1.0%, 1.2%, 1.4%, 1.6%, 1.8%, or 2.0%. The function of Ni is to improve the strength while ensuring that the toughness is not significantly reduced. When the weight percent of Ni is more than 2.0%, the strength improvement is not significant. Therefore, the weight percent of Ni is 0-2.0%. Preferably, in some embodiments, the weight percent of Ni is 0-0.2%.

In the press-hardening steel of the embodiments of the present application, a weight percent of W is 0-1.0%, such as 0, 0.1%, 0.2%, 0.3%, 0.4%, 0.5%, 0.6%, 0.7%, 0.8%, 0.9%, or 1.0%. The function of W is to improve the hardenability and provide a solid solution strengthening effect. When the weight percent of W is more than 1.0%, the strength improvement is not significant. Therefore, the weight percent of W is 0-1.0%. Preferably, in some embodiments, the weight percent of W is 0-0.3%.

Preferably, in some embodiments, the content of impurity N is less than 100 ppm, and the contents of impurities P, S, and O are each less than 200 ppm. N, P, S, and O are all inevitable impurities, and their presence may reduce the toughness of the press-hardening steel. Therefore, lower contents of N, P, S, and O are preferable. In the embodiments of the present application, controlling the content of N to be less than 100 ppm and controlling the contents of P, S, and O to be less than 200 ppm may prevent a reduction in the toughness of the press-hardening steel.

Preferably, in some embodiments, a critical cooling rate of the press-hardening steel is 50°C/s or less, and/or a metallographic structure of the press-hardening steel is 95% or more martensite. When the critical cooling rate of the press-hardening steel is too high, the transformation from austenite to martensite is not favorable, thereby impairing the improvement of the strength of the press-hardening steel. When the proportion of martensite in the metallographic structure of the press-hardening steel is too low, the proportion of other soft phases such as ferrite and pearlite is correspondingly too high, thereby impairing the improvement of the strength of the press-hardening steel.

Preferably, in some embodiments, a prior austenite grain size of the press-hardening steel is 3-15 µm, and/or a bending angle of a 1.4 mm-thick steel sheet of the press-hardening steel in a VDA238-100 standard test is greater than 50°. When the prior austenite grain size of the press-hardening steel is too large, the bending angle decreases, indicating reduced toughness.

Preferably, in some embodiments, the press-hardening steel has a tensile strength of 1,600 MPa or more, such as 1,600 MPa, 1,660 MPa, 1,700 MPa, 1,750 MPa, 1,770 MPa, 1,780 MPa, or 1,800 MPa, and exhibits no cracking within 120 hours under acid immersion under four-point bending loading at a preloaded 100% yield strength in a SEP1970 standard test.

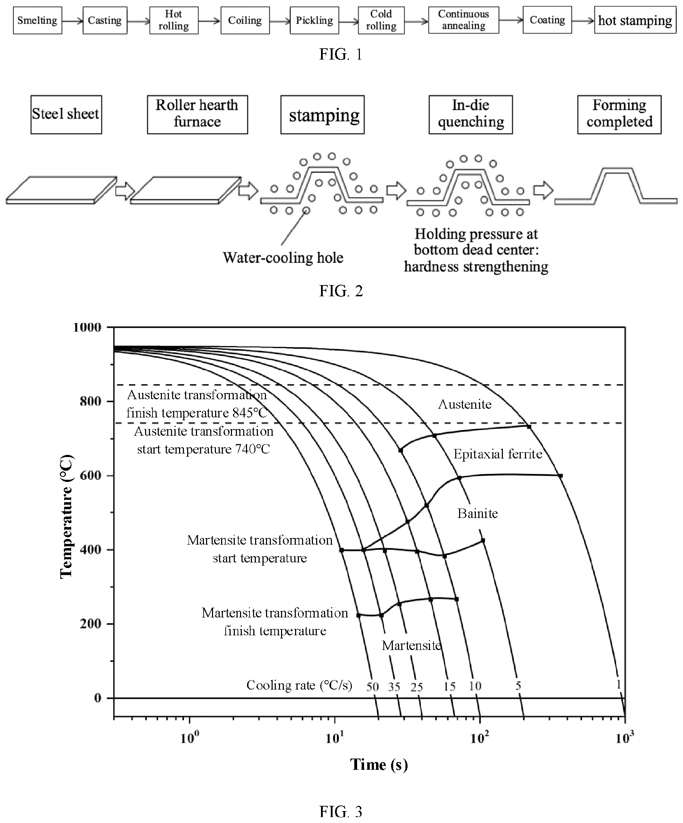

In addition, the embodiments of the present application further provide a preparation method of a high-strength hydrogen embrittlement-resistant press-hardening steel, as shown in FIGS. 1 and 2, including the steps of: smelting, casting, hot rolling, coiling, pickling, cold rolling, continuous annealing, and hot stamping. The hot stamping step includes the steps of: blank heating, stamping, and pressure-holding quenching.

In some embodiments, in the hot rolling step, the finishing rolling temperature is 780-900°C, and/or the coiling temperature is 450-600°C, to facilitate a hot-rolled coil with no or low internal oxidation.

In some embodiments, the dew point of the continuous annealing is -16°C to -31°C, and/or the temperature of the continuous annealing is 740-800°C, facilitating uniform structure and performance.

In some embodiments, coating is further included between the continuous annealing and the hot stamping. After a bare steel sheet is obtained by continuous annealing, an aluminum-silicon layer or a zinc layer may be coated on the surface of the bare steel sheet in advance to prevent oxidation of the bare steel sheet during the subsequent hot stamping process.

In addition, the embodiments of the present application further provide use of the high-strength hydrogen embrittlement-resistant press-hardening steel of the embodiments of the present application in a vehicle.

Due to excellent strength and hydrogen embrittlement resistance, the press-hardening steel of the embodiments of the present application may be used in vehicle components such as seat crossbeams, A/B-pillars, door anti-collision beams, front and rear bumpers, sill beams, and center tunnels, thereby significantly improving the safety performance of vehicles and achieving lightweighting.

The present application is described in detail below with reference to the examples and accompanying drawings.

### Example 1

A high-strength hydrogen embrittlement-resistant press-hardening steel was provided, having the chemical composition shown in Table 1.

A preparation method of the press-hardening steel includes the following steps.

(1) Smelting: the raw materials were proportioned according to the chemical composition of the press-hardening steel and smelted into molten steel. (2) The molten steel was cast to obtain a steel billet. (3) The steel billet was hot-rolled at a finishing rolling temperature of 870°C to obtain a thick steel sheet with a thickness of 4 mm. (4) The hot-rolled thick steel sheet was coiled at a coiling temperature of 550°C to obtain a hot-rolled coil. (5) The hot-rolled coil was pickled to obtain a pickled sheet. (6) The pickled sheet was then cold-rolled at room temperature to obtain a thin steel sheet with a thickness of 1.4 mm. (7) The thin steel sheet was continuously annealed at a dew point of -23°C and a temperature of 780°C for 10 min to obtain a bare steel sheet. (8) An aluminum-silicon layer was coated on the bare steel sheet. (9) The aluminum-silicon-coated steel sheet was heated to 920°C in a roller hearth furnace, then placed into a hot stamping die, subsequently subjected to hot stamping under a constant pressure at about 30°C, and directly quenched in the hot stamping die to obtain the final stamped part.

### Comparative example 1

A press-hardening steel was provided, having the chemical composition shown in Table 1. A preparation method of the press-hardening steel was the same as that in example 1.

### Comparative example 2

A press-hardening steel was provided, having the chemical composition shown in Table 1. A preparation method of the press-hardening steel was the same as that in example 1.

### Example 2

A high-strength hydrogen embrittlement-resistant press-hardening steel was provided, having the chemical composition shown in Table 1. A preparation method of the press-hardening steel was the same as that in example 1.

### Comparative example 3

A press-hardening steel was provided, having the chemical composition shown in Table 1. A preparation method of the press-hardening steel was the same as that in example 1.

### Example 3

A high-strength hydrogen embrittlement-resistant press-hardening steel was provided, having the chemical composition shown in Table 1. A preparation method of the press-hardening steel was the same as that in example 1.

### Comparative example 4

A press-hardening steel was provided, having the chemical composition shown in Table 1. A preparation method of the press-hardening steel was the same as that in example 1.

### Example 4

A high-strength hydrogen embrittlement-resistant press-hardening steel was provided, having the chemical composition shown in Table 1. A preparation method of the press-hardening steel was the same as that in example 1.

### Comparative example 5

A press-hardening steel was provided, having the chemical composition shown in Table 1. A preparation method of the press-hardening steel was the same as that in example 1.

### Comparative example 6

A press-hardening steel was provided, having the chemical composition shown in Table 1. A preparation method of the press-hardening steel was the same as that in example 1.

### Example 5

A high-strength hydrogen embrittlement-resistant press-hardening steel was provided, having the chemical composition shown in Table 1. A preparation method of the press-hardening steel was the same as that in example 1.

### Comparative example 7

A press-hardening steel was provided, having the chemical composition shown in Table 1. A preparation method of the press-hardening steel was the same as that in example 1.

### Performance test

Bending angle test: the bending angles of the 1.4 mm-thick press-hardening steel sheet in a transverse direction (TD) and a rolling direction (RD) were tested according to the VDA238-100 test standard, taking the minimum values.

Hydrogen embrittlement resistance: according to the SEP1970 test standard, the steel was subjected to acid immersion (0.1 mol/L HCl) under four-point bending loading at the preloaded 100% yield strength, and observed for cracking within 120 hours. No hydrogen embrittlement cracking within 120 hours at the 100% yield strength indicates qualified hydrogen embrittlement resistance, and hydrogen embrittlement cracking at the 100% yield strength indicates unqualified hydrogen embrittlement resistance.

**Table 1. Chemical composition of press-hardening steels of examples 1-5 and comparative examples 1-7**

| | C | Mn | Nb | Cr | B | Ti | V | Si | Mo | Ni | W |
|---|---|---|---|---|---|---|---|---|---|---|---|
| Example 1 | 0.27 | 1.25 | 0.030 | 0.40 | 0.003 | 0.034 | - | 0.32 | - | - | - |
| Comparative example 1 | 0.27 | 1.25 | 0.030 | 0.10 | 0.003 | 0.034 | - | 0.32 | - | - | - |
| Comparative example 2 | 0.27 | 1.25 | 0.030 | 1.30 | 0.003 | 0.034 | - | 0.32 | | | |
| Example 2 | 0.26 | 1.35 | 0.032 | 0.60 | 0.003 | 0.034 | - | 0.20 | - | - | - |
| Comparative example 3 | 0.26 | 1.35 | 0.032 | 0.10 | 0.003 | 0.034 | - | 0.20 | - | - | - |
| Example 3 | 0.24 | 1.23 | 0.035 | 0.70 | 0.003 | 0.035 | - | 0.28 | - | - | - |
| Comparative example 4 | 0.24 | 1.23 | 0.035 | 0.15 | 0.003 | 0.035 | - | 0.28 | - | - | - |
| Example 4 | 0.27 | 1.20 | 0.030 | 0.45 | 0.003 | 0.036 | 0.05 | 0.25 | 0.42 | - | - |
| Comparative example 5 | 0.27 | 1.20 | 0.030 | 0.15 | 0.003 | 0.036 | 0.05 | 0.20 | - | - | - |
| Comparative example 6 | 0.27 | 1.20 | 0.07 | 0.45 | 0.003 | 0.036 | 0.05 | 0.25 | 0.42 | - | - |
| Example 5 | 0.24 | 1.28 | 0.043 | 0.50 | 0.003 | 0.035 | 0.05 | 0.20 | 0.40 | 0.2 | 0.3 |
| Comparative example 7 | 0.24 | 1.28 | 0.043 | 0.12 | 0.003 | 0.034 | 0.05 | 0.20 | - | - | - |

**Table 2. Performance of press-hardening steels of examples 1-5 and comparative examples 1-7**

| | Critical cooling rate (°C/s) | Proportion of martensite in metallographic structure (%) | Prior austenite grain size (µm) | Bending angle (°) | Tensile strength (MPa) | Hydrogen embrittlement resistance |
|---|---|---|---|---|---|---|
| Example 1 | 30 | 100 | 6.3 | 52 | 1780 | Qualified |
| Comparative example 1 | 32 | 100 | 7.2 | 50 | 1760 | Unqualified |
| Comparative example 2 | 20 | 100 | 5.7 | 50 | 1810 | Unqualified |
| Example 2 | 34 | 100 | 8.2 | 55 | 1750 | Qualified |
| Comparative example 3 | 35 | 100 | 8.8 | 52 | 1730 | Unqualified |
| Example 3 | 37 | 100 | 8.5 | 58 | 1660 | Qualified |
| Comparative example 4 | 39 | 100 | 9.2 | 55 | 1629 | Unqualified |
| Example 4 | 28 | 100 | 6.0 | 55 | 1800 | Qualified |
| Comparative example 5 | 31 | 100 | 6.6 | 52 | 1782 | Unqualified |
| Comparative example 6 | 30 | 100 | 5.8 | 54 | 1840 | Unqualified |
| Example 5 | 20 | 100 | 6.5 | 58 | 1770 | Qualified |
| Comparative example 7 | 31 | 100 | 8.7 | 55 | 1720 | Unqualified |

As can be seen from Table 1 and Table 2, the press-hardening steels of examples 1-5 of the present application exhibit excellent tensile strength and hydrogen embrittlement resistance. Specifically, the tensile strength is 1,600 MPa or more, with no hydrogen embrittlement cracking within 120 hours at the 100% yield strength.

From the comparison of example 1 with comparative example 1, example 2 with comparative example 3, example 3 with comparative example 4, example 4 with comparative example 5, and example 5 with comparative example 7, it can be seen that Cr contents in comparative examples 1, 3, 4, 5, and 7 are less than the range defined in the present application, and the ratio of the weight percent of Cr to the weight percent of Nb is less than 8, so that the obtained press-hardening steels exhibit hydrogen embrittlement cracking at the 100% yield strength.

From the comparison of example 4 with comparative example 6, it can be seen that the ratio of the weight percent of Cr to the weight percent of Nb in comparative example 6 is less than 8, so that the obtained press-hardening steel exhibits hydrogen embrittlement cracking at the 100% yield strength.

From the comparison of example 1 with comparative example 2, it can be seen that the Cr content in comparative example 2 is more than the range defined in the present application, so that the obtained press-hardening steel exhibits hydrogen embrittlement cracking at the 100% yield strength. In addition, the increased Cr content increases the production cost of the press-hardening steel.

The embodiments of the present application provide a preparation method of the press-hardening steel, including the steps of: smelting, casting, hot rolling, coiling, pickling, cold rolling, continuous annealing, and hot stamping, wherein a holding temperature of the continuous annealing is 740°C or more, and a cooling rate of the continuous annealing is less than 40°C/s; the content of epitaxial ferrite in microstructure after the continuous annealing is 10% or more.

The press-hardening steel includes, by weight percent, the following components: C 0.22-0.28%, Mn 0.8-1.4%, Si 0.1-0.5%, Nb 0.01-0.08%, Cr 0.2-0.8%, B 0.001-0.005%, Ti 0.01-0.06%, V 0-0.5%, Mo 0-1.0%, Ni 0-2.0%, W 0-1.0%, and Cu 0-2.0%, with the balance being Fe and inevitable impurities.

According to the preparation method of the press-hardening steel of the embodiments of the present application, without changing the conventional process of the press-hardening steel, the initial structure state obtained after cold rolling is optimized by adjusting the holding temperature and the cooling rate of the continuous annealing, introducing more epitaxial ferrite enriched with C, Mn, and Si, so as to provide more austenite nucleation sites during the subsequent hot stamping process, refine the prior austenite grain size, and provide more opportunities for retained austenite to be preserved at room temperature due to the Mn enrichment, thereby improving the bending toughness of the high-strength press-hardening steel of 1.6 GPa or more.

In the preparation method of the press-hardening steel of the embodiments of the present application, under the composition of the press-hardening steel, the microstructure obtained after the cold-rolling step is ferrite and pearlite. By controlling the holding temperature and/or the cooling rate of the continuous annealing, it is ensured that the structure includes residual ferrite, epitaxial ferrite, pearlite, and other minor hard phases (bainite and martensite).

The holding temperature of the continuous annealing is 740°C or more, such as 740°C, 750°C, 760°C, 770°C, 780°C, 790°C, 800°C, 810 °C, 820°C, 830°C, 840°C, 850°C, 860°C, 870°C, or 880°C. The cooling rate of the continuous annealing is less than 40°C/s, such as 10°C/s, 15°C/s, 20°C/s, 25°C/s, 30°C/s, 35°C/s, or 39°C/s. The initial structure state is optimized to ensure that the content of epitaxial ferrite in the microstructure after the continuous annealing is 10% or more, with C, Mn, and Si enriched in the epitaxial ferrite. Since austenitization initiates preferentially here, more nucleation sites are provided. The amount of prior austenite formed during the subsequent hot stamping process increases, and its size decreases, thereby significantly improving the bending toughness of the press-hardening steel. When the holding temperature of the continuous annealing is less than 740°C and/or the cooling rate is greater than or equal to 40°C/s, it is not conducive to the formation of epitaxial ferrite. The content of epitaxial ferrite is less than 10%, and more hard phases such as bainite and martensite are formed instead, resulting in an insignificant improvement of the bending toughness of the press-hardening steel.

According to the preparation method of the press-hardening steel of the embodiments of the present application, the holding temperature and the cooling rate of the continuous annealing are adjusted based on the composition of the press-hardening steel, to promote the microstructure after the continuous annealing to contain 10% or more of epitaxial ferrite, finally obtaining a bending angle of the press-hardening steel in the TD of 42° or more.

In some embodiments, a hot-dip coating process may further be included between the continuous annealing and the hot stamping. For example, an aluminum-silicon layer or a zinc layer is hot-dip coated to prevent oxidation of the bare steel sheet during the subsequent hot stamping process. When including the hot-dip coating process, the cooling rate of the continuous annealing refers to a cooling rate of a cooling process from the holding temperature of the continuous annealing down to the hot-dip coating temperature. When not including the hot-dip coating process, the cooling rate of the continuous annealing refers to a cooling rate of a cooling process from the holding temperature of the continuous annealing to the room temperature.

In some embodiments, in the hot rolling step, the steel billet heating temperature is 1,200-1,250°C, the finishing rolling temperature is 870-890°C, and the coiling temperature is 450-600°C, to prevent internal oxidation in the middle of the hot-rolled coil along the width direction, which may lead to incomplete removal of the oxide layer during subsequent pickling and affect the hot-dip coating effect of the steel sheet.

In some embodiments, the holding temperature of the continuous annealing is 740-880°C, and the cooling rate of the continuous annealing is 35°C/s or less. When the holding temperature and the cooling rate of the continuous annealing are within the above ranges, the initial structure state may be further optimized, and the content of epitaxial ferrite in the microstructure after the continuous annealing is ensured to be 12% or more, thereby further improving the bending toughness of the press-hardening steel. When the holding temperature of the continuous annealing is too low, it is not conducive to increasing the content of epitaxial ferrite in the microstructure after the continuous annealing. When the holding temperature of the continuous annealing is too high, it is not conducive to cost reduction and efficiency improvement. When the cooling rate of the continuous annealing is too high, it is not conducive to increasing the content of epitaxial ferrite in the microstructure after the continuous annealing. Considering the limitations of the current continuous annealing equipment and cooling methods, preferably, the holding temperature of the continuous annealing is 740-860°C, and the cooling rate of the continuous annealing is 10-35°C/s.

Preferably, in some embodiments, the holding temperature of the continuous annealing is 780-880°C, and the cooling rate of the continuous annealing is 25°C/s or less. The content of epitaxial ferrite in the microstructure after the continuous annealing is 15% or more, which is beneficial to further improving the bending toughness of the press-hardening steel. Considering the limitations of the current continuous annealing equipment and cooling methods, preferably, the holding temperature of the continuous annealing is 780-860°C, and the cooling rate of the continuous annealing is 10-25°C/s.

In some embodiments, the holding time of the continuous annealing is 6-30 min, such as 6 min, 10 min, 15 min, 20 min, 25 min, or 30 min, facilitating uniform structure and performance. It may be understood that when the holding temperature of the continuous annealing is set relatively high, the holding time of the continuous annealing may be shorter. When the holding temperature of the continuous annealing is set relatively low, the holding time of the continuous annealing may be set longer. After continuous annealing under the above conditions, the tensile strength of the material is in the range of 400-900 MPa to facilitate coiling and cutting of the stamped sheet.

In the preparation method of the press-hardening steel of the embodiments of the present application, a weight percent of C in the press-hardening steel is 0.22-0.28%, such as 0.22%, 0.23%, 0.24%, 0.25%, 0.26%, 0.27%, or 0.28%. The function of C is to improve the strength and hardenability of the press-hardening steel. When the weight percent of C is less than 0.22%, the strength of the press-hardening steel is less than 1.6 GPa, failing to improve the strength compared with the currently used 22MnB5 press-hardening steel. When the weight percent of C is more than 0.28%, the toughness of the press-hardening steel is significantly reduced, and the welding performance is deteriorated. Considering the balance between the strength and the toughness as well as the welding performance, the weight percent of C is selected to be 0.22-0.28%.

In the preparation method of the press-hardening steel of the embodiments of the present application, a weight percent of Mn in the press-hardening steel is 0.8-1.4%, such as 0.8%, 0.9%, 1.0%, 1.1%, 1.2%, 1.3%, or 1.4%. Mn can increase the hardenability of the steel, reduce the austenite formation temperature, and provide a solid solution strengthening effect by replacing the solid solution. When the weight percent of Mn is less than 0.8%, the hardenability of the steel is poor, and the austenite formation temperature is high. When the weight percent of Mn is more than 1.4%, welding is adversely affected. Therefore, the weight percent of Mn is 0.8-1.4%.

In some embodiments, 710 MPa < 3,000 MPa × weight percent of C + 65 MPa × weight percent of Mn < 900 MPa. C and Mn exhibit solid solution strengthening effects. In the foregoing relational expression, 3,000 MPa represents the solid solution strength of C, and 65 MPa represents the solid solution strength of Mn. 3,000 MPa × the weight percent of C is a contribution value from the solid solution strengthening effect of C, and 65 MPa × the weight percent of Mn is a contribution value from the solid solution strengthening effect of Mn. When the contents of C and Mn satisfy the foregoing relational expression, the welding C equivalent can be controlled while improving the strength of the press-hardening steel, thereby avoiding the deterioration of welding performance.

In the preparation method of the press-hardening steel of the embodiments of the present application, a weight percent of Si in the press-hardening steel is 0.1-0.5%, such as 0.1%, 0.2%, 0.3%, 0.4%, or 0.5%. The function of Si is to promote the formation of epitaxial ferrite during the cooling process of the continuous annealing, thereby improving the toughness of the press-hardening steel. In addition, it can improve the self-tempering resistance during the hot stamping process, thereby preventing a reduction in strength. When the weight percent of Si is less than 0.1%, it is not conducive to the formation of epitaxial ferrite during the cooling process of the continuous annealing, and thus not conducive to improving the toughness of the press-hardening steel. When the weight percent of Si is more than 0.5%, more SiO₂ tends to form in the scale formed in the hot rolling process, which is not conducive to improving the surface quality of the hot-rolled strip steel. Therefore, the weight percent of Si is 0.1-0.5%.

In the preparation method of the press-hardening steel of the embodiments of the present application, a weight percent of Nb in the press-hardening steel is 0.01-0.08%, such as 0.01%, 0.02%, 0.03%, 0.04%, 0.05%, 0.06%, 0.07%, or 0.08%. During the hot stamping process, Nb forms carbides or carbonitrides, which pin the austenite grain boundaries and refine the grain size, resulting in a small prior austenite grain size of the press-hardening steel. This ensures that the prior austenite grain size of the material after hot stamping is less than 15 mm, thereby improving the toughness of the press-hardening steel. When the weight percent of Nb is less than 0.01%, the toughness of the press-hardening steel is poor. When the weight percent of Nb is more than 0.08%, the grain refinement effect is not significant, and the cost increases. Therefore, the weight percent of Nb is 0.01-0.08%.

In the preparation method of the press-hardening steel of the embodiments of the present application, a weight percent of Cr in the press-hardening steel is 0.2-0.8%, such as 0.2%, 0.3%, 0.4%, 0.5%, 0.6%, 0.7%, or 0.8%. A low critical cooling rate is required for the press-hardening steel to ensure complete transformation from austenite to martensite during the die cooling process after hot stamping, thereby improving the mechanical properties of the press-hardening steel. However, reducing the prior austenite grain size will increase the critical cooling rate. Therefore, a specified amount of Cr needs to be added to improve the hardenability of the steel and reduce its critical cooling rate. When the weight percent of Cr is less than 0.2%, the critical cooling rate of the steel is relatively high, which may result in the formation of soft phases such as ferrite and pearlite structure, significantly reducing the strength of the press-hardening steel. When the weight percent of Cr is more than 0.8%, dense scale (Cr₂O₃) may be formed during the hot rolling process, which is difficult to remove completely by pickling and affects the subsequent hot-dip coating effect. Therefore, the weight percent of Cr is 0.2-0.8%.

In some embodiments, the contents of Cr and Mn satisfy the following relationship: 1% < weight percent of Cr + weight percent of Mn < 2%. This may prevent the formation of severe and dense scale (Cr₂O₃) during the hot rolling process, which may affect the pickling effect and thus affect the subsequent hot-dip coating effect. In addition, this is to prevent oxidation of the steel during the continuous annealing process, which may also affect the hot-dip coating effect. When the weight percent of Cr + the weight percent of Mn is less than 1%, adverse effects such as insufficient hardenability and excessively high austenitization temperature may occur. When the weight percent of Cr + the weight percent of Mn is more than 2%, adverse effects such as poor welding performance and poor hot-dip coating effect may occur.

In the preparation method of the press-hardening steel of the embodiments of the present application, a weight percent of B in the press-hardening steel is 0.001-0.005%, such as 0.001%, 0.002%, 0.003%, 0.004%, or 0.005%. The function of B is to improve the hardenability of the steel and reduce the critical cooling rate of the steel, enabling the steel material to transform from the austenite phase to the martensite phase in the hot stamping step, thereby improving the strength of the press-hardening steel. When the weight percent of B is less than 0.001%, the critical cooling rate of the steel is relatively high, which may result in the formation of other soft phases such as ferrite and pearlite, significantly reducing the strength of the press-hardening steel. When the weight percent of B is more than 0.005%, the hardenability effect is not significant. Therefore, the weight percent of B is 0.001-0.005%.

In the preparation method of the press-hardening steel of the embodiments of the present application, a weight percent of Ti in the press-hardening steel is 0.01-0.06%, such as 0.01%, 0.02%, 0.03%, 0.04%, 0.05%, or 0.06%. After adding Ti, TiN precipitates will form, which may fix N element and prevent the consumption of B element, thereby fully exploiting the effect of B in improving hardenability.

In the preparation method of the press-hardening steel of the embodiments of the present application, a weight percent of V in the press-hardening steel is 0-0.5%. During the hot stamping process, V forms carbides or carbonitrides, which pin the austenite grain boundaries and refine the grain size, resulting in a small prior austenite grain size of the press-hardening steel. This ensures that the prior austenite grain size of the material after hot stamping is less than 15 mm, thereby improving the toughness of the press-hardening steel. When the weight percent of V is more than 0.5%, grain refinement and precipitation strengthening are not significant, and the production cost increases. Therefore, the weight percent of V is 0-0.5%.

In the preparation method of the press-hardening steel of the embodiments of the present application, a weight percent of Mo in the press-hardening steel is 0-1.0%, such as 0, 0.1%, 0.2%, 0.3%, 0.4%, 0.5%, 0.6%, 0.7%, 0.8%, 0.9%, or 1.0%. The function of Mo is to improve the hardenability of the steel and reduce the critical cooling rate of the steel, enabling the steel material to transform from the austenite phase to the martensite phase in the hot stamping step, thereby improving the strength of the press-hardening steel. When the weight percent of Mo is more than 1.0%, the hardenability is not significant, and the production cost increases, which is not conducive to cost reduction and efficiency improvement. Therefore, the weight percent of Mo is 0-1.0%.

In the preparation method of the press-hardening steel of the embodiments of the present application, a weight percent of Ni in the press-hardening steel is 0-2.0%, such as 0, 0.2%, 0.4%, 0.6%, 0.8%, 1.0%, 1.2%, 1.4%, 1.6%, 1.8%, or 2.0%. The function of Ni is to improve the strength while ensuring that the toughness is not significantly reduced. When the weight percent of Ni is more than 2.0%, the strength improvement is not significant. Therefore, the weight percent of Ni is 0-2.0%.

In the preparation method of the press-hardening steel of the embodiments of the present application, a weight percent of W in the press-hardening steel is 0-1.0%, such as 0, 0.1%, 0.2%, 0.3%, 0.4%, 0.5%, 0.6%, 0.7%, 0.8%, 0.9%, or 1.0%. The function of W is to improve the hardenability and provide a solid solution strengthening effect. When the weight percent of W is more than 1.0%, the strength improvement is not significant. Therefore, the weight percent of W is 0-1.0%.

In the preparation method of the press-hardening steel of the embodiments of the present application, a weight percent of Cu in the press-hardening steel is 0-2.0%, such as 0, 0.2%, 0.4%, 0.6%, 0.8%, 1.0%, 1.2%, 1.4%, 1.6%, 1.8%, or 2.0%. The function of Cu is to improve the strength of the press-hardening steel through precipitation strengthening by nanoscale Cu-rich phases. When the weight percent of Cu is more than 2.0%, the strength improvement is not significant, and the production cost increases. Therefore, the weight percent of Cu is 0-2.0%.

In some embodiments, the content of impurity N is less than 100 ppm, and the contents of impurities P, S, and O are each less than 200 ppm. N, P, S, and O are all inevitable impurities, and their presence may reduce the toughness of the press-hardening steel. Therefore, lower contents of N, P, S, and O are preferable. In the embodiments of the present application, controlling the content of N to be less than 100 ppm and controlling the contents of P, S, and O to be less than 200 ppm may prevent a reduction in the toughness of the press-hardening steel.

In some embodiments, the critical cooling rate of the press-hardening steel is 25-50°C/s. When the critical cooling rate of the press-hardening steel is too low, the full martensitic microstructure is more easily formed during the cooling process of the continuous annealing, which is not conducive to the formation of epitaxial ferrite. When the critical cooling rate of the press-hardening steel is too high, the transformation from austenite to martensite is not favorable, thereby impairing the improvement of the strength of the press-hardening steel.

In some embodiments, the microstructure of the press-hardening steel is 95% or more martensite, such as 95%, 96%, 97%, 98%, 99%, or 100%. When the proportion of martensite in the microstructure of the press-hardening steel is too low, the proportion of soft phases such as ferrite and pearlite is correspondingly too high, thereby impairing the improvement of the strength of the press-hardening steel. Preferably, the microstructure of the press-hardening steel is 100% martensite.

In some embodiments, the prior austenite grain size of the press-hardening steel is 3-15 µm. When the prior austenite grain size of the press-hardening steel is too large, the bending angle is reduced, indicating reduced toughness.

In some embodiments, the tensile strength of the press-hardening steel is 1.6 GPa or more, such as 1.6 GPa, 1.7 GPa, 1.8 GPa, or 1.9 GPa. A bending angle of a 1.4 mm-thick steel sheet of the press-hardening steel in a VDA238-100 standard test is greater than 42°.

In addition, the embodiments of the present application further provide use of the press-hardening steel in a vehicle.

Due to excellent strength and bending toughness, the press-hardening steel of the embodiments of the present application may be used in vehicle components such as seat crossbeams, A/B-pillars, door anti-collision beams, front and rear bumpers, sill beams, and center tunnels, thereby significantly improving the safety performance of vehicles and achieving lightweighting.

The present application is described in detail below with reference to the examples and accompanying drawings.

### Example 6

A high-strength and high-bending-toughness press-hardening steel was provided, having the chemical composition shown in Table 3. The content of impurity N was less than 100 ppm, and the contents of impurities P, S, and O were each less than 200 ppm.

A preparation method of the press-hardening steel includes the following steps.
(1) Smelting: the raw materials were proportioned according to the chemical composition of the press-hardening steel and smelted into molten steel.
(2) The molten steel was cast to obtain a steel billet.
(3) The steel billet was hot-rolled at a heating temperature of 1,200°C and a finishing rolling temperature of 870°C to obtain a thick steel sheet with a thickness of 4 mm.
(4) The hot-rolled thick steel sheet was coiled at a coiling temperature of 550°C to obtain a hot-rolled coil.
(5) The hot-rolled coil was pickled to obtain a pickled sheet.
(6) The pickled sheet was then cold-rolled at room temperature to obtain a thin steel sheet with a thickness of 1.4 mm.
(7) The thin steel sheet was continuously annealed at a temperature of 770°C for 10 min, then subjected to hot-dip coating at a cooling rate of 25°C/s in an Al-Si bath at 650°C, and then rapidly cooled to room temperature at a cooling rate of 35°C/s to obtain an Al-Si-coated steel sheet.
(8) The Al-Si-coated steel sheet was heated to 920°C in a roller hearth furnace for 240 s. Then, the austenitized sheet was rapidly transferred to a hot stamping die, subsequently subjected to hot stamping under a constant pressure of about 20 MPa, and directly quenched in the hot stamping die to obtain the final stamped part.

### Example 7

The chemical composition and preparation method of the press-hardening steel of example 7 were the same as those of example 6, except that continuous annealing was performed at 800°C.

### Example 8

The chemical composition and preparation method of the press-hardening steel of example 8 were the same as those of example 6, except that continuous annealing was performed at 830°C.

### Example 9

The chemical composition and preparation method of the press-hardening steel of example 9 were the same as those of example 6, except that continuous annealing was performed at 860°C.

### Example 10

The chemical composition of the press-hardening steel of example 10 was shown in Table 5, and the preparation method in example 10 was the same as that in example 6.

### Example 11

The chemical composition and preparation method of the press-hardening steel of example 11 were the same as those of example 10, except that continuous annealing was performed at 800°C.

### Example 12

The chemical composition and preparation method of the press-hardening steel of example 12 were the same as those of example 10, except that continuous annealing was performed at 830°C.

### Example 13

The chemical composition of the press-hardening steel of example 13 was shown in Table 7, and the preparation method in example 13 was the same as that in example 1, except that continuous annealing was performed at 740°C.

### Example 14

The chemical composition and preparation method of the press-hardening steel of example 14 were the same as those of example 13, except that continuous annealing was performed at 760°C.

### Example 15

The chemical composition and preparation method of the press-hardening steel of example 15 were the same as those of example 13, except that continuous annealing was performed at 780°C.

### Example 16

The chemical composition and preparation method of the press-hardening steel of example 16 were the same as those of example 13, except that continuous annealing was performed at 800°C.

### Example 17

The chemical composition and preparation method of the press-hardening steel of example 17 were the same as those of example 16, except that after continuous annealing, hot-dip coating was performed at a cooling rate of 10°C/s in an Al-Si bath at 650°C.

### Example 18

The chemical composition and preparation method of the press-hardening steel of example 18 were the same as those of example 16, except that after continuous annealing, hot-dip coating was performed at a cooling rate of 20°C/s in an Al-Si bath at 650°C.

### Example 19

The chemical composition and preparation method of the press-hardening steel of example 19 were the same as those of example 16, except that after continuous annealing, hot-dip coating was performed at a cooling rate of 30°C/s in an Al-Si bath at 650°C.

### Example 20

The chemical composition and preparation method of the press-hardening steel of example 20 were the same as those of example 16, except that after continuous annealing, hot-dip coating was performed at a cooling rate of 35°C/s in an Al-Si bath at 650°C.

### Comparative example 8

The chemical composition and preparation method of the press-hardening steel of comparative example 8 were the same as those of example 16, except that after continuous annealing, hot-dip coating was performed at a cooling rate of 40°C/s in an Al-Si bath at 650°C.

### Comparative example 9

The chemical composition and preparation method of the press-hardening steel of comparative example 9 were the same as those of example 16, except that after continuous annealing, hot-dip coating was performed at a cooling rate of 50°C/s in an Al-Si bath at 650°C.

### Comparative example 10

The chemical composition and preparation method of the press-hardening steel of comparative example 10 were the same as those of example 16, except that continuous annealing was performed at 780°C for 6 min, and then hot-dip coating was performed at a cooling rate of 40°C/s in an Al-Si bath at 650°C.

### Performance test

Bending angle test: the bending angles of the 1.4 mm-thick press-hardening steel sheet in a transverse direction (TD) and a rolling direction (RD) were tested according to the VDA238-100 test standard, taking the minimum values.

**Table 3. Chemical composition of press-hardening steels of examples 6-9**

| Element | C | Mn | Si | Cr | Ti | B | Nb | Fe |
|---|---|---|---|---|---|---|---|---|
| Content (%) | 0.27 | 1.19 | 0.29 | 0.34 | 0.039 | 0.0017 | 0.041 | Balance |

**Table 4. Tensile strength and bending property of press-hardening steels of examples 6-9**

| | Continuous annealing | | | Content of epitaxial ferrite after continu ous annealin g (%) | Martens ite content (%) | Prior austen ite grain size (µm) | Directi on | Bendi ng angle (°) | Tensil e streng th (MPa) |
|---|---|---|---|---|---|---|---|---|---|
| | Holding temperat ure (°C) | Holdi ng time (min) | Cooli ng rate (°C/s) | | | | | | |
| Exam ple 1 | 770 | 10 | 25 | 18 | 100 | 8.9 | RD | 50.0±0 .5 | 1760 |
| | | | | | | | TD | 42.2±1 .2 | |
| Exam ple 2 | 800 | 10 | 25 | 24 | 100 | 8.0 | RD | 52.7±0 .8 | 1767 |
| | | | | | | | TD | 45.8±1 .0 | |
| Exam ple 3 | 830 | 10 | 25 | 30 | 100 | 7.6 | RD | 55.6±1 .1 | 1765 |
| | | | | | | | TD | 50.3±0 .9 | |
| Exam ple 4 | 860 | 10 | 25 | 35 | 100 | 6.3 | RD | 57.5±1 .3 | 1766 |
| | | | | | | | TD | 54.4±0 .6 | |

**Table 5. Chemical composition of press-hardening steels of examples 10-12**

| Element | C | Mn | Si | Cr | Ti | B | Nb | Fe |
|---|---|---|---|---|---|---|---|---|
| Content (%) | 0.26 | 1.20 | 0.21 | 0.52 | 0.045 | 0.0029 | 0.040 | Balance |

**Table 6. Tensile strength and bending property of press-hardening steels of examples 10-12**

| | Continuous annealing | | | Content of epitaxial ferrite after continu ous annealin g (%) | Martens ite content (%) | Prior austen ite grain size (µm) | Directi on | Bendi ng angle (°) | Tensil e streng th (MPa) |
|---|---|---|---|---|---|---|---|---|---|
| | Holding temperat ure (°C) | Holdi ng time (min) | Cooli ng rate (°C/s) | | | | | | |
| Exam ple 5 | 770 | 10 | 25 | 15 | 100 | 9.5 | RD | 52.0±0 .8 | 1752 |
| | | | | | | | TD | 43.5±0 .6 | |
| Exam ple 6 | 800 | 10 | 25 | 20 | 100 | 9.1 | RD | 54.4±0 .9 | 1760 |
| | | | | | | | TD | 49.7±1 .0 | |
| Exam ple 7 | 830 | 10 | 25 | 24 | 100 | 8.2 | RD | 57.5±0 .2 | 1762 |
| | | | | | | | TD | 55.6±0 .7 | |

**Table 7. Chemical composition of press-hardening steels of examples 13-16**

| Element | C | Mn | Si | Cr | Ti | B | Nb | Fe |
|---|---|---|---|---|---|---|---|---|
| Content (%) | 0.24 | 1.2 | 0.20 | 0.45 | 0.040 | 0.0030 | 0.038 | Balance |

**Table 8. Tensile strength and bending property of press-hardening steels of examples 13-16**

| | Continuous annealing | | | Content of epitaxial ferrite after continu ous annealin g (%) | Martens ite content (%) | Prior austen ite grain size (µm) | Directi on | Bendi ng angle (°) | Tensil e streng th (MPa) |
|---|---|---|---|---|---|---|---|---|---|
| | Holding temperat ure (°C) | Holdi ng time (min) | Cooli ng rate (°C/s) | | | | | | |
| Exam ple 8 | 740 | 10 | 25 | 11 | 100 | 9.6 | RD | 56.8±0 .3 | 1662 |
| | | | | | | | TD | 50.1±0 .8 | |
| Exam ple 9 | 760 | 10 | 25 | 14 | 100 | 9.3 | RD | 58.7±1 .1 | 1658 |
| | | | | | | | TD | 52.1±0 .9 | |
| Exam ple 10 | 780 | 10 | 25 | 17 | 100 | 8.9 | RD | 61.5±0 .6 | 1665 |
| | | | | | | | TD | 55.2±1 .2 | |
| Exam ple 11 | 800 | 10 | 25 | 22 | 100 | 8.4 | RD | 63.3±0 .5 | 1667 |
| | | | | | | | TD | 56.0±0 .4 | |

**Table 9. Tensile strength and bending property of press-hardening steels of examples 17-20 and comparative examples 8-9**

| | Continuous annealing | | | Conte nt of epitax ial ferrite after coolin g (%) | Martens ite content (%) | Prior austen ite grain size (µm) | Directi on | Bendi ng angle (°) | Tensil e streng th (MPa ) |
|---|---|---|---|---|---|---|---|---|---|
| | Holding temperat ure (°C) | Holdi ng time (min) | Cooli ng rate (°C/s) | | | | | | |
| Example 12 | 800 | 10 | 10 | 35 | 100 | 7.4 | RD | 66.8± 0.7 | 1671 |
| | | | | | | | TD | 58.3± 0.4 | |
| Example 13 | 800 | 10 | 20 | 28 | 100 | 8.1 | RD | 64.3± 0.6 | 1668 |
| | | | | | | | TD | 56.3± 0.5 | |
| Example 14 | 800 | 10 | 30 | 18 | 100 | 8.9 | RD | 62.1± 0.4 | 1662 |
| | | | | | | | TD | 55.8± 0.9 | |
| Example 15 | 800 | 10 | 35 | 12 | 100 | 9.3 | RD | 57.4± 0.6 | 1664 |
| | | | | | | | TD | 52.7± 1.1 | |
| Comparat ive example 1 | 800 | 10 | 40 | 2 | 100 | 10.8 | RD | 51.2± 0.4 | 1658 |
| | | | | | | | TD | 46.8± 0.7 | |
| Comparat ive example 2 | 800 | 10 | 50 | 0 | 100 | 11.0 | RD | 50.4± 0.6 | 1665 |
| | | | | | | | TD | 46.2± 0.8 | |

As can be seen from Tables 4, 6, 8, and 9, the press-hardening steels of examples 6-21 exhibit excellent strength and bending toughness.

From the comparison among examples 6-9 in Table 4, examples 10-12 in Table 6, and examples 13-16 in Table 8, it can be seen that within the holding temperature of continuous annealing of 740-860°C, the higher the holding temperature, the higher the content of epitaxial ferrite after continuous annealing and before hot stamping, and the larger the bending angle of the press-hardening steel.

From the comparison among example 16 in Table 8 and examples 17-20 and comparative examples 8-9 in Table 9, it can be seen that during the cooling process of continuous annealing at 10-35°C/s, the lower the cooling rate, the higher the content of epitaxial ferrite after continuous annealing and before hot stamping, and the larger the bending angle of the press-hardening steel. However, the cooling rates of continuous annealing in comparative example 8 and comparative example 9 are higher than the range defined in the present application, which results in an epitaxial ferrite content of less than 10% after continuous annealing, and finally significantly reduces the bending angle of the press-hardening steel.

It should be noted that, for the method embodiments, they are described as a series of action combinations for simplicity of description. However, those skilled in the art should understand that the embodiments of the present application are not limited by the described sequence of actions, since according to the embodiments of the present application, some steps may be performed in other sequences or simultaneously. Furthermore, those skilled in the art should also understand that the embodiments described in the specification are all preferred embodiments, and the actions involved are not necessarily essential to the embodiments of the present application.

It should be noted that, as used herein, the terms "include/comprise", "contain" or any other variations thereof are intended to cover a non-exclusive inclusion, such that a process, method, article or device that comprises a list of elements includes not only those elements, but also other elements not expressly listed, or elements inherent to such process, method, article or device. Without further limitation, an element defined by the phrase "comprising a/an ..." does not preclude the presence of additional identical elements in the process, method, article or device that comprises the element.

The embodiments of the present application have been described above with reference to the accompanying drawings. However, the present application is not limited to the above-described specific embodiments, which are merely illustrative rather than restrictive. Under the inspiration of the present application and without departing from the scope protected by the purpose of the present application and the claims, those of ordinary skill in the art may make many forms, all of which fall within the protection scope of the present application.

## Claims

1. A high-strength hydrogen embrittlement-resistant press-hardening steel, **characterized by** comprising, by weight percent, following components: C 0.22-0.28%, Mn 0.8-1.4%, Nb 0.01-0.08%, Cr 0.2-0.8%, B 0.001-0.005%, Ti 0.01-0.06%, V 0-0.5%, Si 0-0.5%, Mo 0-1.0%, Ni 0-2.0%, and W 0-1.0%, with balance being Fe and inevitable impurities, and a ratio of a weight percent of Cr to a weight percent of Nb being greater than 8.

2. The high-strength hydrogen embrittlement-resistant press-hardening steel according to claim 1, **characterized in that** 710 MPa < 3,000 MPa × weight percent of C + 65 MPa × weight percent of Mn < 900 MPa.

3. The high-strength hydrogen embrittlement-resistant press-hardening steel according to claim 1 or 2, **characterized in that** the weight percent of Mn is 0.8-1.3%.

4. The high-strength hydrogen embrittlement-resistant press-hardening steel according to claim 1, **characterized in that** the ratio of the weight percent of Cr to the weight percent of Nb is greater than 12.

5. The high-strength hydrogen embrittlement-resistant press-hardening steel according to claim 1 or 4, **characterized in that** the weight percent of Nb is 0.02-0.04%.

6. The high-strength hydrogen embrittlement-resistant press-hardening steel according to claim 1, **characterized in that** content of impurity N is less than 100 ppm, and contents of impurities P, S, and O are each less than 200 ppm.

7. The high-strength hydrogen embrittlement-resistant press-hardening steel according to claim 1, **characterized in that** a critical cooling rate of the high-strength hydrogen embrittlement-resistant press-hardening steel is 50°C/s or less, and/or, a metallographic structure of the high-strength hydrogen embrittlement-resistant press-hardening steel is 95% or more martensite, preferably 100% martensite.

8. The high-strength hydrogen embrittlement-resistant press-hardening steel according to claim 1, **characterized in that** a prior austenite grain size of the high-strength hydrogen embrittlement-resistant press-hardening steel is 3-15 µm, and/or, a bending angle of a 1.4 mm-thick steel sheet of the high-strength hydrogen embrittlement-resistant press-hardening steel in a VDA238-100 standard test is greater than 50°.

9. The high-strength hydrogen embrittlement-resistant press-hardening steel according to claim 1, **characterized in that** the high-strength hydrogen embrittlement-resistant press-hardening steel has a tensile strength of 1,600 MPa or more, and exhibits no cracking within 120 hours under acid immersion under four-point bending loading at a preloaded 100% yield strength in a SEP1970 standard test.

10. Use of the high-strength hydrogen embrittlement-resistant press-hardening steel according to any one of claims 1 to 9 in a vehicle.

11. A preparation method of a press-hardening steel, **characterized by** comprising steps of: smelting, casting, hot rolling, coiling, pickling, cold rolling, continuous annealing, and hot stamping, wherein a holding temperature of the continuous annealing is 740°C or more, and a cooling rate of the continuous annealing is less than 40°C/s; content of epitaxial ferrite in microstructure after the continuous annealing is 10% or more;
the press-hardening steel comprises, by weight percent, following components: C 0.22-0.28%, Mn 0.8-1.4%, Si 0.1-0.5%, Nb 0.01-0.08%, Cr 0.2-0.8%, B 0.001-0.005%, Ti 0.01-0.06%, V 0-0.5%, Mo 0-1.0%, Ni 0-2.0%, W 0-1.0%, and Cu 0-2.0%, with balance being Fe and inevitable impurities.

12. The preparation method of the press-hardening steel according to claim 11, **characterized in that** the holding temperature of the continuous annealing is 740-880°C.

13. The preparation method of the press-hardening steel according to claim 12, **characterized in that** the holding temperature of the continuous annealing is 740-860°C.

14. The preparation method of the press-hardening steel according to claim 12, **characterized in that** the holding temperature of the continuous annealing is 780-880°C.

15. The preparation method of the press-hardening steel according to claim 11 or 12, **characterized in that** the cooling rate of the continuous annealing is 35°C/s or less.

16. The preparation method of the press-hardening steel according to claim 15, **characterized in that** the cooling rate of the continuous annealing is 10-35°C/s.

17. The preparation method of the press-hardening steel according to claim 15, **characterized in that** the cooling rate of the continuous annealing is 25°C/s or less.

18. The preparation method of the press-hardening steel according to claim 17, **characterized in that** the cooling rate of the continuous annealing is 10-25°C/s.

19. The preparation method of the press-hardening steel according to claim 11 or 12, **characterized in that** the content of the epitaxial ferrite in the microstructure after the continuous annealing is 12% or more.

20. The preparation method of the press-hardening steel according to claim 19, **characterized in that** the content of the epitaxial ferrite in the microstructure after the continuous annealing is 15% or more.

21. The preparation method of the press-hardening steel according to claim 11 or 12, **characterized in that** a prior austenite grain size of the press-hardening steel is 3-15 µm.

22. A press-hardening steel, **characterized by** being prepared by the preparation method according to any one of claims 11 to 21.

23. Use of the press-hardening steel according to claim 22 in a vehicle.
